# EUROPEAN PATENT SPECIFICATION

(11) **EP 2 692 698 B1**
(45) Date of publication and mention of the grant of the patent: **14.01.2015**
(21) Application number: 13178882.0
(22) Date of filing: 01.08.2013
(51) Int. Cl.: C02F 1/469, C02F 1/00

(54) **A method and an apparatus to remove ions**
Verfahren und Vorrichtung zur Entfernung von Ionen
Procédé et appareil pour éliminer les ions

(30) Priority: 02.08.2012 NL 2009267
(43) Date of publication of application: 05.02.2014
(73) Proprietor: Voltea B.V., 2171 AE Sassenheim (NL)
(72) Inventor: van der WAL, Albert, 2341 LP OEGSTGEEST (NL); van LIMPT, Bart, 2318 AX LEIDEN (NL); BIESHEUVEL, Pieter Maarten, 6703 HD WAGENINGEN (NL); REINHOUDT, Hank Robert, 2241 VZ WASSENAAR (NL)
(74) Representative: EP&C

(56) References cited:
- EP-A1- 2 315 342
- WO-A1-01/89656
- WO-A1-2011/138663
- WO-A2-2012/091866
- US-A- 5 620 597
- US-A1- 2004 121 204
- US-A1- 2007 272 550
- US-A1- 2008 105 551
- US-A1- 2009 045 048
- US-A1- 2010 102 009
- US-A1- 2011 073 487
- US-B1- 6 309 532
- US-B1- 6 325 907
- US-B1- 6 628 505

## Description

### Field

A method of operating an apparatus to remove ions from water, the method comprising the following steps:
allowing water to flow in between a first and a second electrode of a capacitor;
charging the capacitor with an electrical charge via a controller in order to attract ions into the electrodes; and,
releasing ions from the electrodes by releasing electrical charge from the capacitor via the controller.

### Background

In recent years one has become increasingly aware of the impact of human activities on the environment and the negative consequences this may have. Ways to reduce, reuse and recycle resources are becoming more important. In particular, clean water is becoming a scarce commodity. Therefore, various methods and devices for purifying water have been published.

A method for water purification is by capacitive deionisation, using an apparatus provided with a flow through capacitor (FTC) for removal of ions in water. The FTC functions as an electrically regenerable cell for capacitive deionisation. By charging electrodes, ions are removed from an electrolyte and are held in electric double layers at the electrodes. The electrodes can be (partially) electrically regenerated to desorb such previously removed ions without adding chemicals.

The apparatus for removal of ions comprises one or more pairs of spaced apart electrodes (each pair of electrodes comprising a cathode and an anode) and a spacer, separating the electrodes and allowing water to flow between the electrodes. The electrodes are provided with current collectors or backing layers and a high surface area material, such as e.g. carbon, which may be used to store removed ions. The current collectors may be in direct contact with the high surface area material. Current collectors are electrically conductive and transport charge in and out of the electrodes and into the high surface area material.

A charge barrier may be placed adjacent to an electrode of the flow-through capacitor. The term charge barrier refers to a layer of material which is permeable or semi-permeable for ions and is capable of holding an electric charge. Ions with opposite charge as the charge barrier charge can pass the charge barrier material, whereas ions of similar charge as the charge of the charge barrier cannot pass or only partially pass the charge barrier material. Ions of similar charge as the charge barrier material are therefore contained or trapped either in e.g. the electrode compartment and/or in the spacer compartment. The charge barrier is often made from an ion exchange material. A charge barrier may allow an increase in ionic efficiency, which in turn allows energy efficient ion removal. There is still a remaining problem that the capacity of the apparatus to remove ions from water may decrease over time.

### Summary

It is an object of the invention to provide an improved method of operating an apparatus to remove ions from water.

According to an embodiment there is provided a method of operating an apparatus to remove ions from water, the method comprising the following steps:
allowing water to flow in between a first and a second electrode of a capacitor;
charging the capacitor with a constant electrical charge per unit time with an electrical charge via a controller in order to attract ions into the electrodes;
releasing ions from the electrodes with a constant electrical charge per unit time by releasing electrical charge from the capacitor via the controller, and during a subsequent charging step, controlling the charging of the capacitor with the controller by applying an electrical charge which is not substantially exceeding an amount of electrical charge released from the capacitor during the step of releasing ions from the electrode, wherein the method comprises measuring or calculating a quantity of electrical charge released from the capacitor and the amount of electrical charge charged to the capacitor with the controller. By applying a charge during charging which is not substantially exceeding an amount of electrical charge released form the capacitor during the step of releasing ions there is no charge build up on the capacitor over time. A controller will be used to measure or calculate a quantity of electrical charge released from the capacitor and the amount of electrical charge charged to the capacitor to control the charging and releasing ions steps. The performance of the apparatus may therefore be more stable over time and the amount of ions removed from the water may be more constant over time.

With not substantially exceeding an amount of electrical charge released from the capacitor during the step of releasing ions from the electrode may be meant that during the charging step not more than 125%, preferably not more than 110%, even more preferably not more than 105%, and most preferably not more than 100% of the amount of electrical charge released from the capacitor during the step of releasing ions from the electrode is applied. The performance of the apparatus will be kept more stable over time and the build up of charge will be avoided.

According to a further embodiment the invention relates to an apparatus to remove ions, the apparatus being provided with:
a first and a second electrode forming a capacitor;
a spacer for separating the electrodes of the capacitor and allowing water to flow in between the electrodes; and
a controller for controlling charging and discharging steps of the capacitor the controller constructed and arranged to charge the capacitor with a constant charging current and/or discharge the capacitor with a constant discharge current;
wherein the controller comprises a calculator to calculate the quantity of electrical charge released from the capacitor during the discharging step and constructed and arranged to control electrical charge stored on the capacitor during a charging step to not substantially exceed an amount of electrical charge released from the capacitor during a preceding discharging step.

### Brief description of the figures

Embodiments of the invention will be described, by way of example only, with reference to the accompanying schematic drawings in which corresponding reference symbols indicate corresponding parts, and in which:
Figure 1 shows a schematic cross-section of an apparatus for removal of ions;
Figure 2a shows a detail enlargement of the stack 3 of figure 1;
Figure 2b shows a detail of figure 1;
Figure 3 shows the applied voltage and the outlet conductivity of a deionization process for two charge releasing ions steps operated at a constant current setting;
Figure 4 shows the accumulated charge and the outlet conductivity of a deionization process for two charge - ion release steps at a constant current setting;
Figure 5a and 5b show the applied voltage and the outlet conductivity of a deionization process for two charge - release ions steps at pre-set purify and ion release steps; and,
Figure 6 disclose a controller for use in the apparatus of figure 1 for controlling the charging and ion release step according to an embodiment.

### Detailed description of the invention

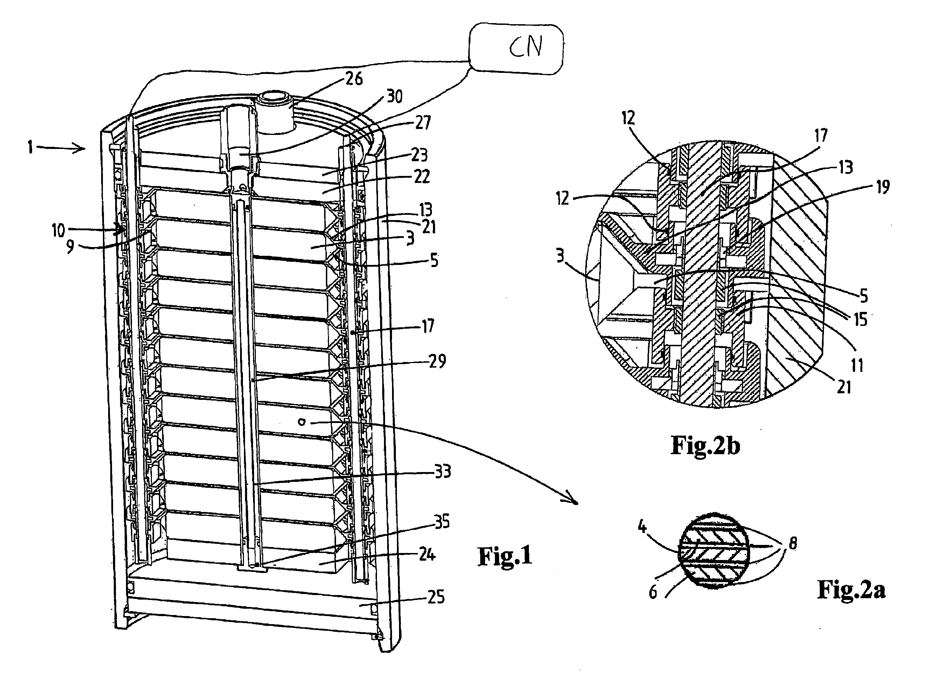

Figure 1 shows a schematic cross-section of an apparatus for removal of ions 1 produced with a method according to the invention with a part of the housing removed. In the example the apparatus may comprise twelve flow through capacitor stacks 3. The flow through capacitor stack 3 may be provided with repeating units of a first electrode 4 (see figure 2a, which is an enlargement of a stack), a spacer 8, and a second electrode 6. The first electrode 4 may be provided with a first current collector 5, (see figure 1) which may be bundled together with a first connector 11. The second electrode 6 may be provided with a second current collectors 9, which may equally be bundled together on the other side of the apparatus with the second connector 10.

The first connector 11 (see figure 2b, which is a partial enlargement of figure 1) may be used to clamp the first current collectors 5 together. The current collectors 5, 9 and the first connector 11 and the second connector 10 may be made of the same material e.g. carbon (e.g. graphite) to lower the electrical resistivity between the current collectors 5, 9 and the connectors 11, 10. The first connector 11 may be provided with inserts 15 e.g. from a metal, such as, for example copper. The inserts 15 may be screwed in the first connector 11 so as to assure low electrical resistivity between the insert 15 and the first connector 11. The power terminal 27 is a construction that is connected to both the power supply and one or more connectors 10, 11. The power terminal 27 may be fixed into the upper and/or bottom part 22, 24 and /or any other part of the housing. The power terminal 27 may be provided with a rail e.g. rod 17 made of, for example, metal e.g. copper to electrically connect all the first connectors 11 via their inserts 15 to a power source (not shown). The first connector 11 and the insert 15 may be provided with an opening for the rod 17. The inserts 15 and the rod 17 may be shielded of from the water inside the apparatus by e.g. resin, glue or a paste which functions as a water barrier. The resin, glue or a paste or any other water shielding material may optionally be applied to the hollow parts 19 of the connector 11 after compression of the stack. To circumvent that the resin may contaminate the stack 3 rubber rings 12 may be provided in the insert 15. A tray 13 may be provided to help manufacturing one stack 3 and assembling the stacks 3 together in a housing 21 of the apparatus. Within the housing the stacks 3 may be compressed between the top and bottom part 22, 24. The top part 23 of the housing 21 is provided with a feed-through allowing the rod 17 to make a connection with a power source. This way electrical charge can enter the first electrode via the first current collector 5 and also leave the electrode again, e.g. during regeneration of the electrodes. Water may be provided to an interior of the apparatus via a water inlet 26 the water is allowed to flow around the flow through capacitor stacks 3 and may enter the stacks via the spacers. The flow through capacitor stack 3 is provided with a hole in the middle of the stack. In the hole a circular tube 29 is provided and via the space between the hole and the tube the water may flow to an outlet 30. The interior of the tube 29 may be provided with a nut 35 and threaded bar 33 which may help to compress the electrodes in the stacks 3 and for compressing the stacks 3 between the upper and bottom part 22, 24 of the housing 21.

Compressing may occur during production of the apparatus, or optionally during maintenance. By compressing all the stacks at once it may be assured that the compression force is very similar or even equal for each stack and at the same time equally or homogeneously distributed over the surface of the electrodes.

During manufacturing of the stack 3 a first electrode comprising a first current collector 5 may be provided in the tray 13. A spacer may be located on top of the first electrode; and a second electrode may be put on top of the spacer. Subsequently a spacer may be put on top of the second electrode followed by another first electrode. This may be repeated until for example 10 first and second electrode units are provided in the stack 3 held by the tray 13 each first electrode separated from a second electrode with a spacer. Subsequently a connector part 11 may be located on top of the current collectors 5 and a metal insert 15 may be screwed from the other side of the stack 3 through the tray 13 and the first current collectors 5 to fix the stack 3 to the tray 13.

The tray 13 and the stack 3 may be connected to the rod 17 of the first power terminal 27 by sliding the insert 15 over the rod 17 to allow a good electrical contact. The hole in the insert 15 may be of such a size that it allows for good electrical contact between the insert 15 and the rod 17 and at the same time allowing the insert 15 to slide over the rod 17. The connector 11 may be pressed on the tray 13 with the current collector 5 or multiple current collectors 5 in between the connector 11 and the tray 13 by screwing of the insert 15 in the connector part 11. To assure good electrical conductivity between the connector 11 and the first current collector 5 the pressure on the connector part 15 and the current collector may be less than 100 Bar, preferably less than 50 Bar, more preferably less than 20 Bar and most preferably around 10 Bar.

Multiple stacks 3 can be connected to the rod 17 and the stacks 3 may be connected in a similar way to the second connector 10. A force may be exerted on the stacks 3 with the nut 35 and threaded bar 33 via the upper and bottom part 22, 24 so as to compress the first and second electrode in a first direction parallel to the length of the threaded bar 33 which is perpendicular to the main surface of the electrode. The force may exert a pressure on the stack of less than 5 Bar, preferably less than 3 Bar.

The first and second connector 11, 10 allow for movement of the first and second current collector 5, 9 along the rod 17, 18 in the first direction such that the current collectors are not damaged by the compression force on the stack 3. The movements may be in the order of 0,05 to 10% of the height of the multiple stacks 3 in the first direction. After enough pressure is exerted on the stack a resin or grease may be provided along or through the first and /or second connector 11, 10 in the hollow parts 19 of the connectors 10 , 11. The resin after hardening fixes the position of the connectors 10, 11 and may protect the (metal) inserts 15 and rod 17 from corrosion.

The apparatus may be operated with the following steps:
allowing water to flow in between a first electrode 4 and a second electrode 6 of a capacitor;
charging the capacitor with an electrical charge via a controller C in order to attract ions into the electrodes 4, 6.
releasing ions from the electrodes by releasing electrical charge from the capacitor via the controller. In order to obtain stable operation, it may be important for the apparatus to determine the moment to switch from charging the electrode to releasing ions from the electrode and vice versa. This switching may be controlled by the controller by ,
   1) Setting a limit to the maximum voltage. The controller may be applying a pre-set electrical current of for example 5 Ampere per stack. The Voltage on the electodes may be measured and the Voltage for the charging step may be limited in order not to exceed a maximum value and the controller may switch to releasing ions from the electrodes once the maximum Voltage is reached. Similarly, the Voltage for the releasing ions step may not exceed a maximum (minimum) and the controller may switch to charging the electrodes again once the maximum Voltage is reached or once a certain amount of charge has been released from the electrodes.

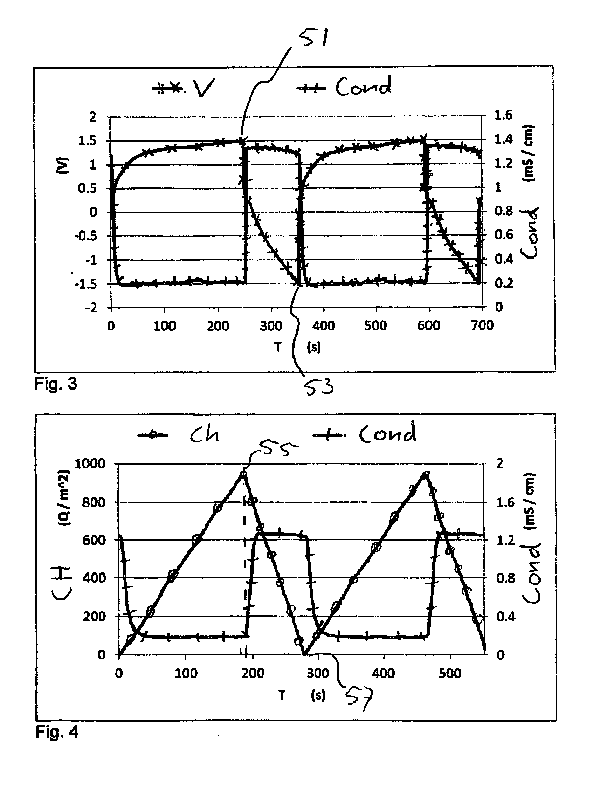

      Figure 3 shows the applied voltage and the outlet conductivity of a deionization process consisting of two purify (ion removal from the water) and two ion release steps operated at a constant current setting. Operating at a constant current setting means that the controller adapt the Voltage to keep the current constant to for example 5 Ampere per stack. In the purify step the electrodes are charging and ions are removed from the water leading to a lowering of the outlet conductivity of the water and an increase of the voltage during the purify cycle because of the charging of the electrodes. When a certain amount of electrical charge has been stored on the electrode or when the voltage reaches a certain value, e.g. 1.5 V, at 51 then the current is reversed by the controller to for example to -5 Ampere per stack and the ion release step starts. This results in an increase in the outlet conductivity as well as in a decrease of the measured voltage which can even become negative (for example, if a membrane is used). When a certain amount of charge has been released from the electrodes or when the measured voltage reaches a second maximum 53 (minimum), e.g. -1.5 V, the current is reversed again and the charging process restarts.
   2) Fixed charge. The charging of the capacitor may be controlled with the controller by applying an electrical charge during the purify step which does not substantially exceed the amount of electrical charge released during the ion release step (electrode regeneration) or which is lower or equal than the amount of electrical charge released from the capacitor during a previous ion release step.
      Figure 4 shows the accumulated charge on the electrodes and the outlet conductivity of a deionization process for two electrode charging and ion release steps. Figure 4 show that initially starting with t=0s, the system is purifying, leading to a lowering of the outlet conductivity and an increase of the applied charge on the electrode. The current may be controlled by the controller in a constant current mode, which leads to a linear increase of the charge with time (as shown in figure 4) or an a constant voltage mode which leads to a nonlinear increase of the charge with time (not shown).
      In fig 4 the current is reversed after a pre-set time 55 after which the ion release step starts. However, it is also possible that the controller switches the current after a certain amount of charge has been accumulated on the electrodes. Again the current in the ion release step may be controlled in the constant current or the constant voltage mode by the controller. An increase in outlet conductivity and a decreasing accumulated charge on the electrodes is shown. When the accumulated charge reaches zero 57, or when a certain amount of charge has been released from the electrodes then the current is reversed again and the charging restarts.
   3) Fixed timings. By setting the charging time and the time for ion release the controller may switch from charging to ion release and vice versa at pre-set timings.

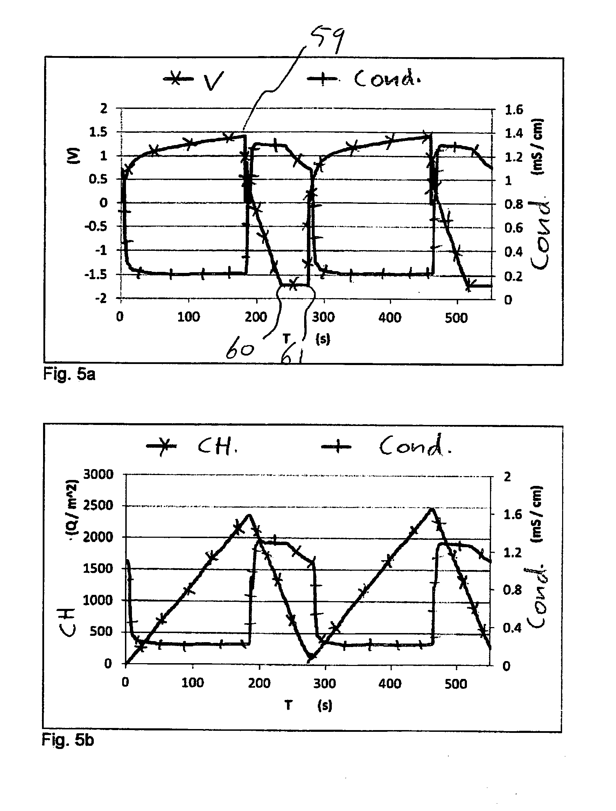

      Figure 5a and 5b show the applied voltage and the outlet conductivity of a deionization process for two charge - ion release steps. Initially, the system is charging with the controller charging the electrodes at constant current. The outlet conductivity may be lowered and the applied voltage on the electrodes may be increasing because the controller increases the voltage on the electrodes in order to maintain the constant current. When the time reaches a certain value 59, in this case 180 seconds, the current is reversed and the ion release step starts with the controller again maintaining the current constant. This results in an increase in the outlet conductivity and an applied voltage that becomes more negative until the voltage reaches a minimum at 60 where the controller interferes to limit the voltage to a maximum e.g. at -1,7 V. When the time reaches a second pre-set timing 61, in this case 270 seconds, the current may be reversed again and the charging may restart whereby the controller may keep the current constant.
      Figure 5b shows the accumulated charge and the outlet conductivity of a deionization process as described in figure 5a. In this example, the amount of charge that is released from the electrode in the ion release step is lower than the amount of charge applied during the purify step. This may lead to an unstable operation because the electrodes are not fully regenerated, and part of the electrical charge is still present in the electrodes, when the next purify step starts. As a consequence the desalination performance may decrease over time, because the electrodes can remove less ions from the water flowing in between the electrodes. It may be important that during the purify step no more charge is applied on the electrodes as the amount of charge that has been removed from the electrodes during the ions release step in order to maintain charge balance. The controller may decide to increase the amount of charge released from the electrodes during the ion release step for example by increase the electrical current and/or the (maximum) voltage and/or the electrode regeneration time. Therefore applying an electrical charge during the purify step which is not exceeding the amount of electrical charge released from the capacitor during a previous ion releasing step can help to enhance the stable operation of the system.
   4) Combinations. The controller can also choose different combinations where part of the purify step or ion release step is controlled by as timer, or by a certain amount of electrical charge which is applied and released from the electrodes, whereby the charging can be done at constant current and/or at constant voltage or partly in constant current and constant voltage mode. The controller can choose to charge the electrodes with the same amount of charge that was released during the ion release step of the previous cycle or take for example the average of a certain number of previous ion release steps.

Measuring or calculating an amount of electrical charge released from the capacitor and measuring or calculating the amount of electrical charge applied to the capacitor with the controller may be required in order to maintain a well balanced to keep the capacitor in such a way that there is no excess charge build up on the electrodes over time resulting in an unstable performance and reduced ion removal capacity of the system. The measured or calculated electrical charge may be compared with a reference electrical charge and the electrical voltage or electrical current applied to the capacitor may be adjusted in case the measured or calculated electrical charge is different from that of the reference electrical charge.

The charging step and the ion release step may be controlled by applying a constant voltage (the electrical potential difference between the two porous electrodes). For example, during the charging step, a typical value of 1.2 V may be applied to attract ions and produce desalinated water, while during ion release, e.g. by short-circuiting the two electrodes, or by even reversing the cell voltage, ions may be released back into the spacer channel which results in a concentrated salt solution. Operation at a constant cell voltage may however have as a disadvantage that the effluent salt concentration may change in time, e.g., the ion concentration in the desalinated water stream may increase during the charging step. This is because at the start of the charging step, the electrodes may still be mainly uncharged, and thus the driving force over the channel is at a maximum (no loss of voltage in the electrical double layer). Consequently, there may be a large ion flux directed towards and into the electrodes at the start of the charging step. Nevertheless, the ongoing ion adsorption in the electrical double layers during charging may lead to a gradual saturation of the electrodes, and an increase of the voltage drop over the electrical double layer. As a consequence the remaining voltage across the spacer channel may steadily decrease in time. The overall effect may be that the effluent salt concentration (the salt concentration of the water flowing out of the cell) may first decrease, go through a minimum, and then gradually increase again.

The gradual change of effluent concentration over time may not be desired in practical applications, instead it may be more advantageous if water is produced of a constant desalination level. To obtain an effluent stream with a constant reduced salt concentration, it may be preferable to use a constant current (CC) running between the two electrodes, instead of a constant cell voltage (CV) applied over the electrodes. Under constant current conditions, the capacitor may be charged with a constant charge per unit time and/or the charge may be released from the capacitor with a constant amount of electrical charge per unit time.

The externally applied constant electrical current on the electrodes, may translate into an equally large ionic current in the cell, which has contributions from the ionic flux of positive ions (such as Na⁺) and negative ions (such as Cl⁻). In a constant current operation an effluent salt concentration may be kept constant in time, during for example the charging step but also during the ion release step. Another advantage of an operation using constant current maybe that the effluent concentration can be easily and accurately controlled at a certain required level by varying the amount of electrical current going in and out of the electrodes. This may be advantageous from the viewpoint of the consumer who desires a fresh water supply with a constant and tunable salt concentration. Another advantage of using a constant current operation may be that it is more energy efficient because the Voltage during the "first" ions that are attracted to the electrode may be lower compared to a constant Voltage operation so that the energy for ion removal which is equal to the current * Voltage is lower.

The method may comprise measuring a voltage difference over electrodes of the capacitor with a voltage measurement device; and, limiting the charging of the electrodes by controlling the voltage difference between the first and second electrode so that it does not exceed a pre-set threshold value. If the voltage difference is exceeding the threshold value electrolyses may take place at one of the electrodes which may damage the electrode or could lead to an electrode imbalance. Time may be measured with a timer and the time together with the voltage difference may be used to obtain a representation of the Voltage over time. The measured Voltage over the capacitor as a function of time during the charging and the ion releasing steps may be registered and the Voltage as a function of time may be registered in the memory of the controller. An actual measured Voltage difference over the first and second electrode of the capacitor as a function of time may be compared with the registered Voltage difference as a function of time stored in the memory of the controller.

The amount of electrical charge released during the ion releasing step may be calculated from a measured current and the measured time during the ion release step. The amount of electrical charge that may be released from the capacitor during the ion release step may be registered in a memory of the controller. During charging of the capacitor in a subsequent charging step the amount of charge that is applied to the capacitor may not exceed or even be lower or equal than the amount of charge which has been registered in the memory of the controller. In this way it may be assured that not more charge is applied to the electrodes than may be discharged during the ion release step. This way the charge on the electrodes may be balanced during several charging and discharging (ion release) steps and hence the desalination performance of the system can be maintained over prolonged periods of time.

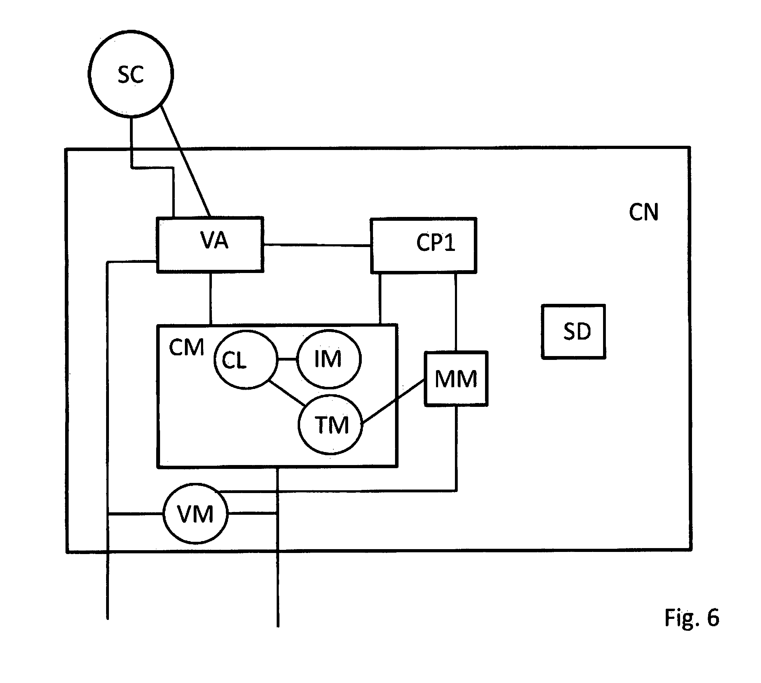

During charging of the capacitor the controller CN (see figure 6) may be calculating the electrical charge with a charge measuring device CM by multiplying a measured current (measured with current measuring device IM) during charging with a measured time from a timer (TM) with calculator CL (see figure 6).

By integrating the current during charging with the time the charging took place the total charge applied to the capacitor may be calculated with calculator CL as well. During ion release the current may be integrated with the time the ion release took place to calculate the total ions released from the capacitor.

By assuring that the charge supplied during charging is substantially equal to the charge removed from the electrodes during discharging no charge will be left on the capacitor keeping the capacity of the capacitor to remove ions from the water during the purify steps substantially constant.

The controller may comprise a memory MM in which the amount of charge released during the ion release step is registered. This information may be used during the charging step to ensure that the amount of charge during charging does not exceed the electrical charge previously released. In case there is an unbalance between the electrical charge applied during charging and the registered amount of charge, which has previously been released from the electrode then an error signal may be generated.

The apparatus may be provided with a controller CN for controlling the charging and discharging steps of the capacitor; wherein the controller is constructed and arranged to ensure that a certain amount of electrical charge is stored on the capacitor during a charging step which does not exceed the amount of electrical charge released from the capacitor during a preceding discharging step. The controller may be constructed and arranged to charge the capacitor with a constant charging current and/or discharge the capacitor with a constant discharge current. The controller CN may be connected to a power source SC.

To keep the current constant the controller CN may be provided with a current measurement device IM for measuring an electrical current going into the electrodes. A processor CP1 may be used for comparing the measured current with a reference current value stored in the memory MM (see figure 6). If the measured current is different from the reference current value than, for example the voltage VA applied to the capacitor may be adjusted or the charging or discharging times may be adjusted or the charging or discharging current so that the measured current with the measurement device IM is equal to the reference current value.

The controller may be provided with a voltage measuring device VM to measure a voltage difference between the connecting lines to the electrodes, and a memory MM to store a voltage over time profile and the controller CN may be provided with the timer so as to compare the measured voltage as a function of the time with the stored voltage over time profile in the memory with the processor CP1.

For example, the stored voltage over time profile may be an ideal profile of the initial working of the apparatus. If after a while the actual voltage over time profile of the apparatus is much different than the stored voltage over time profile this may be an indication that a correction is required. The controller CN may comprise a signalling device SD for signalling an error signal if the result of the comparison between the measured voltage as a function of time and the stored voltage over time is larger than a threshold value. The controller may be provided with a communication link to communicate with a remote maintenance service centre. If an error is send from the controller to the maintenance centre then maintenance may be scheduled for the apparatus in the maintenance centre.

The apparatus may be provided with a limiter to limit the voltage over the electrodes so that the voltage stays within a threshold range to circumvent that the potential difference over the electrodes becomes too high which may lead to irreversible damage of the capacitor. For example, when the potential becomes too high electro-chemical reactions may occur at the electrodes. The limiter may be incorporated in the controller to allow that the voltage from a source SC stays with a maximum allowable voltage or may be a separate module.

The electrodes (anode and or the cathode) may be made metal free by making them from carbonaceous material, for example activated carbon, which may be bond together in a polytetrafluoroethylene (Teflon™) matrix or carbon aerogels. The electrodes, which may be used in FTC cells may be treated with a concentrated salt solution to enhance the ion removal capacity of the electrodes as well as ion conductivity and hence the speed of removal. The electrodes may comprise a high surface area layer e.g. a porous carbon layer, which can be a flexible layer, or a non flexible layer.

The carbon used in the electrode layer may comprise activated carbon, and optionally any other carbonaceous material, such as carbon black, carbon aerogels, carbon nanofibres graphene or carbon nanotubes. The carbon may be chemically activated carbon or may be steam activated carbon. The carbon may have a high surface area of at least 500 m²/g, preferably at least 1000 m²/g, and more preferable at least 1500 m²/g. The anode and cathode may even be made out of different carbonaceous materials. Well known non-flexible carbon layers are made from carbon aerogels. These aerogels may be manufactured as resorcinol-formaldehyde aerogel, using pyrolysis. Depending on the density, carbon aerogels may be electrically conductive, making composite aerogel paper useful as electrodes for deionization in Flow Through Capacitors.

The carbon may be present in the electrode in a concentration of at least 60%, preferably at least 70%, more preferable at least 80%, or even at least 85% by weight of the dry electrode. The use of thermoplastic or viscoelastic material such as latex or curable resins to form monoliths from powdered material is common. Examples of carbon layers that use Poly Fluor Tetra Etheen (PTFE) as binder material are the PACMM™ series (from Material Methods). One embodiment may comprise an active carbon fiber woven layer or carbon cloth, e.g. the Zorflex ® range (from Chemviron Carbon).

One preferred embodiment may comprise a carbon coating comprising: a binder, activated carbon and carbon black, which can be coated directly onto the current collector with a method described in a patent application with application number PCT/EP2008/064992 incorporated herein by reference to form an electrode.

The electrode may comprise a current collector. The current collector may be made from an electrically conducting material. Suitable metal free materials are e.g. carbon, such as graphite, graphene, graphite sheets or carbon mixtures with high graphite content. It is advantageous to use a metal free electrode and current collector, because metals are expensive and introduce a risk of corrosion. The current collector is generally in the form of a sheet. Such sheet is herein defined to be suitable to transport at least 33 Amps/m2 and up to 2000 Amps/m2. The thickness of a graphite current collector then typically becomes from 100 to 1000 micrometer, generally 200 to 500 micrometer.

### Spacer

The spacer material may comprise an inert type material, such as an open space synthetic material and can be any material made from e.g. a polymer, plastic or fiberglass. The spacer can be a porous or non porous, woven or non woven material. The spacer may be prepared from a material that is electrically insulating, but allows ion conductance. Suitable spacers are for example the Nitex ® range or Petex ® range (from Sefar), which are open mesh fabrics or filter fabrics, made from polyamide or polyetheentereftalate.

### Charge barrier layer

The flow through capacitor may comprise a charge barrier. The charge barrier comprises a membrane, selective for anions or cations, or certain specific anions or cations, which may be placed between the electrode and the spacer. The charge barrier may be applied to the high surface area electrode layer as a coating layer or as a laminate layer. Suitable membrane materials may be homogeneous or heterogeneous. Suitable membrane materials comprise anion exchange and/or cation exchange membrane materials, preferably ion exchange materials comprising strongly dissociating anionic groups and/or strongly dissociating cationic groups. Examples of such membrane materials are Neosepta™ range materials (from Tokuyama), the range of PC-SA™ and PC-SK™ (from PCA GmbH), ion exchange membrane materials ex Fumatec, ion exchange membrane materials Ralex™ (from Mega) or the Excellion™ range of heterogeneous membrane material (from Snowpure).

### Stack

A FTC may comprise at least one repeating unit of:
- anionic electrode comprising a current collector
- optionally an anion exchange membrane as charge barrier
- conventional FTC spacer
- optionally a cation exchange membrane as charge barrier
- cathode electrode comprising a current collector
multiple repeating units may be used to build up a stack and in the current invention the stacks are provided with a tray for positioning the stack within the apparatus for removal of ions and to obtain equal distribution of pressure and water flow.

Typically the number of repeating units in a FTC stack, as found in practice, is limited by the number of electrode layers than can be practically bundled and connected to the connector. It is preferred that the number of repeating units in a FTC is at least 1, preferably at least 5, more preferably at least 10, still more preferably at least 20. For practical reasons, the number of repeating units is generally not more than 200, preferably not more than 150, more preferably not more than 100, or even not more than 50.

The stack may be compressed at a pressure of less than 5 Bar, preferably less than 3 Bar.

The stack may be provided with, so called, floating electrodes. Floating electrodes are electrodes not directly being connected to a power source but receiving a polarized charge from other electrodes in the stack which are connected to a power source or from other floating electrodes. Floating electrodes may be positioned parallel and in between master electrodes in the stack. The invention may be used to connect the master electrodes in the stack to the power source. An advantage of using floating electrodes is that the voltages on the connector may be higher while the currents through the connector may be lower. Electrical loss due to the resistivity in the connector may be lowered significantly by using floating electrodes.

While specific embodiments of the invention have been described above, it may be appreciated that the invention may be practiced otherwise than as described. For example, the invention may take the form of a computer program containing one or more sequences of machine-readable instructions describing a method as disclosed above, or a data storage medium (e.g. semiconductor memory, magnetic or optical disk) having such a computer program stored therein.

The descriptions above are intended to be illustrative, not limiting. Thus, it may be apparent to one skilled in the art that modifications may be made to the invention as described without departing from the scope of the claims set out below

## Claims

1. A method of operating an apparatus to remove ions from water, the method comprising the following steps:
allowing water to flow in between a first and a second electrode of a capacitor;
charging the capacitor with a constant electrical charge per unit time via a controller in order to attract ions into the electrodes;
releasing ions from the electrodes with a constant electrical charge per unit time by releasing electrical charge from the capacitor via the controller, and during a subsequent charging step, controlling the charging of the capacitor with the controller by applying an electrical charge which is not substantially exceeding an amount of electrical charge released from the capacitor during the step of releasing ions from the electrode and the method comprises measuring or calculating a quantity of electrical charge released from the capacitor and the amount of electrical charge charged to the capacitor with the controller.

2. The method according to claim 1, wherein the method comprises:
measuring or calculating the electrical charge that is charged to the capacitor;
comparing the measured or calculated electrical charge with a reference electrical charge and adjusting the electrical voltage on the capacitor in case the measured or calculated electrical charge is different from that of the reference electrical charge.

3. The method according to any of the preceding claims, wherein the method comprises measuring a voltage difference over electrodes of the capacitor with a voltage measurement device; and, limiting the charging of the electrodes by controlling the voltage difference between the first and second electrode so that it does not exceed a pre-set threshold value.

4. The method according to any of claims 1 to 3, wherein the method comprises measuring the time with a timer and providing this information to the controller.

5. The method according to any of claims 1 to 4, wherein the quantity of electrical charge released during the releasing ions step is calculated from a measured current and the measured time during the releasing ions step

6. The method according to any of claims 1 to 5, wherein the method comprises registering the quantity of electrical charge that has been released from the capacitor during the releasing ions step in a memory of the controller.

7. The method according to claim 6, wherein during charging of the capacitor in a subsequent charging step the quantity of charge that is applied to the capacitor is lower or equal than the quantity of charge which has been registered in the memory of the controller.

8. The method according to any of claims 1 to 6, wherein the method comprises measuring a Voltage over the capacitor as a function of time during the charging and the releasing ions step and registering the voltage as a function of time in the memory of the controller.

9. The method according to claim 8, wherein the method comprises measuring a voltage difference over the first and second electrode of the capacitor as a function of time and comparing this with the registered Voltage difference as a function of time stored in the memory of the controller.

10. The method according to any of the preceding claims wherein during charging of the capacitor the controller is calculating the electrical charge by multiplying a measured current during charging with a measured time from a timer.

11. An apparatus to remove ions, the apparatus being provided with:
a first and a second electrode forming a capacitor;
a spacer for separating the electrodes of the capacitor and allowing water to flow in between the electrodes; and
a controller for controlling charging and discharging steps of the capacitor the controller constructed and arranged to charge the capacitor with a constant charging current and/or discharge the capacitor with a constant discharge current;
wherein the controller comprises a calculator to calculate the quantity of electrical charge released from the capacitor during the discharging step and constructed and arranged to control electrical charge stored on the capacitor during a charging step to not substantially exceed an amount of electrical charge released from the capacitor during a preceding discharging step.

12. The apparatus according to claim11, wherein the controller comprises:
a current measurement device for measuring an electrical current applied to the capacitor; and,
a processor for comparing the measured current with a reference current value and if the measured current is different from the reference current value adjusting the voltage applied to the capacitor so that the measured current is equal to the reference current value.

13. The apparatus according to claim 11 or 12, wherein the controller comprises:
a limiter to limit the voltage difference between the first and second electrode of the capacitor so that it does not exceed a pre-set threshold value;
a timer to measure the time; or,
a memory in which the quantity of charge released during the releasing ions step is registered.

14. The apparatus according to any of claims 11-13, wherein the apparatus comprises a voltage measuring device to measure a voltage difference over the first and second electrode of the capacitor, and a memory to store a voltage over time profile and the controller is capable of comparing the measured voltage as a function of time with the stored voltage over time profile.

15. The apparatus according to claim 14, wherein the controller comprises a signalling device for signalling an error signal if the result of the comparison between the measured voltage as a function of time and the stored voltage over time profile is larger than a threshold signal, and/or the signalling device is constructed and arranged to communicate with a remote control centre.

## Patentansprüche

1. Verfahren zum Betreiben einer Vorrichtung zur Entfernung von Ionen aus Wasser, wobei das Verfahren die folgenden Schritte umfasst:
Zulassen, dass Wasser zwischen eine ersten und eine zweite Elektrode eines Kondensators fließt;
Laden des Kondensators mit einer konstanten elektrischen Ladung pro Zeiteinheit über einen Regler, damit Ionen an die Elektroden gezogen werden;
Abgeben der Ionen aus den Elektroden mit einer konstanten elektrischen Ladung pro Zeiteinheit durch Abgeben von elektrischer Ladung aus dem Kondensator über den Regler, und während eines nachfolgenden Ladeschritts, Steuern der Ladung des Kondensators mit dem Regler durch Anwenden einer elektrischen Ladung, die einen Betrag elektrischer Ladung im Wesentlichen nicht überschreitet, die aus dem Kondensator während des Schritts zur Abgabe von Ionen aus der Elektrode abgegeben wird, und das Verfahren das Messen oder das Berechnen einer Menge elektrischer Ladung, die vom Kondensator abgegeben wird und den Betrag elektrischer Ladung, mit der der Kondensator mit dem Regler geladen wird, umfasst

2. Verfahren nach Anspruch 1, wobei das Verfahren umfasst:
Messen oder Berechnen der elektrischen Ladung, mit der der Kondensator geladen wird;
Vergleichen der gemessenen oder berechneten elektrischen Ladung mit einer elektrischen Referenzladung und Anpassen der elektrischen Spannung auf den Kondensator, falls die gemessene oder berechnete elektrische Ladung sich von der elektrischen Referenzladung unterscheidet.

3. Verfahren nach einem der vorhergehenden Ansprüche, wobei das Verfahren das Messen einer Spannungsdifferenz über Elektroden des Kondensators mit einem Voltmeter umfasst; und, Begrenzen der Ladung der Elektroden durch Steuern der Spannungsdifferenz zwischen der ersten und der zweiten Elektrode, sodass sie einen vorbestimmten Grenzwert nicht überschreitet.

4. Verfahren nach einem der Ansprüche 1 bis 3, wobei das Verfahren das Messen der Zeit mit einem Zeitgeber und Bereitstellen dieser Information an die Steuereinheit umfasst.

5. Verfahren nach einem der Ansprüche 1 bis 4, wobei die Menge der elektrischen Ladung, die während des Schritts zur Abgabe der Ionen abgegeben wird, aus einem gemessenen Strom und der gemessenen Zeit während des Schritts zur Abgabe der Ionen berechnet wird.

6. Verfahren nach einem der Ansprüche 1 bis 5, wobei das Verfahren das Speichern der Menge der elektrischen Ladung umfasst, die vom Kondensator während des Schritts zur Abgabe der Ionen in einen Speicher der Steuereinheit abgegeben wird.

7. Verfahren nach Anspruch 6, wobei während des Ladens des Kondensators in einem nachfolgenden Ladeschritt die Menge der Ladung, die dem Kondensator zugeführt wird, geringer oder gleich der Menge der Ladung, die im Speicher der Steuereinheit gespeichert wurde, ist.

8. Verfahren nach einem der Ansprüche 1 bis 6, wobei das Verfahren die Messung einer Spannung über dem Kondensator als eine zeitabhängige Funktion während des Ladens und des Schritts zur Abgabe von Ionen und das Speichern der Spannung als eine zeitabhängige Funktion in den Speicher der Steuereinheit umfasst.

9. Verfahren nach Anspruch 8, wobei das Verfahren das Messen einer Spannungsdifferenz über die erste und die zweite Elektrode des Kondensators als eine zeitabhängige Funktion und den Vergleich mit der gespeicherten Spannungsdifferenz als eine zeitabhängige Funktion, die in dem Speicher der Steuereinheit gespeichert wird, umfasst.

10. Verfahren nach einem der vorhergehenden Ansprüche, wobei während des Ladens des Kondensators der Regler die elektrische Ladung durch Multiplizieren eines gemessenen Stroms während des Ladens mit einer gemessenen Zeit eines Zeitgebers berechnet.

11. Vorrichtung zum Entfernen von Ionen, wobei die Vorrichtung aufweist:
eine erste und eine zweite Elektrode, die einen Kondensator ausbildet;
ein Trennelement zur Trennung der Elektroden des Kondensators und Zulassen des Fließens des Wassers zwischen die Elektroden; und
eine Steuereinheit zur Steuerung von Lade- und Entladeschritten des Kondensators, wobei die Steuereinheit konstruiert und angeordnet ist, den Kondensator mit einem konstanten Ladestrom zu laden und/oder dem Kondensator mit einem konstanten Entladestrom zu entladen;
wobei die Steuereinheit einen Rechner umfasst, der die Menge der elektrischen Ladung, die vom Kondensator während des Entladeschritts abgegeben wird, berechnet, und konstruiert und angeordnet ist, die elektrische Ladung, die auf dem Kondensator während eines Ladeschritts gespeichert ist, zu steuern, um eine Menge elektrischer Ladung, die vom Kondensator während eines vorhergehenden Entladeschritts abgegeben wurde, im Wesentlichen nicht zu überschreiten.

12. Vorrichtung nach Anspruch 11, wobei die Steuereinheit umfasst:
ein Strommessgerät zum Messen eines elektrischen Stroms, der einem Kondensator zugeführt wird; und,
einen Prozessor zum Vergleichen des gemessenen Stroms mit einem Referenzwert eines Stroms, und wenn der gemessene Strom sich vom Referenzwert des Stroms unterscheidet, Anpassen der Spannung, die an dem Kondensator anliegt, sodass der gemessene Strom gleich dem Referenzwert des Stroms ist.

13. Vorrichtung nach Anspruch 11 oder 12, wobei die Steuereinheit umfasst:
einen Begrenzer, um die Spannungsdifferenz zwischen der ersten und der zweiten Elektrode des Kondensators zu begrenzen, sodass sie einen vorbestimmten Grenzwert nicht überschreitet;
einen Zeitgeber, um die Zeit zu messen; oder,
einen Speicher, in dem die Menge der Ladung gespeichert wird, die während des Schritts zur Abgabe der Ionen abgegeben wird.

14. Vorrichtung nach einem der Ansprüche 11 bis 13, wobei die Vorrichtung ein Spannungsmessgerät zur Messung einer Spannungsdifferenz über die erste und die zweite Elektrode des Kondensators umfasst, und einen Speicher umfasst, um ein zeitabhängiges Spannungsprofil zu speichern, und die Steuereinheit ausgebildet ist, die gemessene Spannung als Funktion der Zeit mit dem gespeicherten zeitabhängigen Spannungsprofil zu vergleichen.

15. Vorrichtung nach Anspruch 14, wobei der Regler ein Signalisierungsgerät zur Signalisierung eines Fehlersignals umfasst, wenn das Resultat des Vergleichs zwischen der gemessenen Spannung als eine zeitabhängige Funktion und dem gespeicherten zeitabhängigen Spannungsprofil größer als ein Grenzwertsignal ist, und/oder das Signalisierungsgerät konstruiert und angeordnet ist, mit einer Fernlenkstation zu kommunizieren.

## Revendications

1. Procédé de mise en oeuvre d'un appareil pour retirer des ions de l'eau, le procédé comprenant les étapes suivantes :
permettre à l'eau de s'écouler entre des première et deuxième électrodes d'un condensateur ;
charger le condensateur avec une charge électrique constante par unité de temps par l'intermédiaire d'un contrôleur afin d'attirer les ions dans les électrodes ;
libérer les ions des électrodes avec une charge électrique constante par unité de temps en libérant la charge électrique du condensateur par l'intermédiaire du contrôleur et, pendant une étape de charge suivante, commandant la charge du condensateur par le contrôleur en appliquant une charge électrique qui ne dépasse pas sensiblement une quantité de charge électrique libérée du condensateur pendant l'étape de libération des ions de l'électrode, et le procédé comprend la mesure ou le calcul d'une quantité de charge électrique libérée du condensateur et de la quantité de charge électrique chargée dans le condensateur par le contrôleur.

2. Procédé selon la revendication 1, dans lequel le procédé comprend :
la mesure ou le calcul de la charge électrique qui est chargée dans le condensateur ;
la comparaison de la charge électrique mesurée ou calculée avec une charge électrique de référence et l'ajustement de la tension électrique sur le condensateur dans le cas où la charge électrique mesurée ou calculée est différente de la charge électrique de référence.

3. Procédé selon l'une quelconque des revendications précédentes, dans lequel le procédé comprend la mesure d'une différence de tension sur les électrodes du condensateur avec un dispositif de mesure de tension ; et la limitation de la charge des électrodes en commandant la différence de tension entre les première et deuxième électrodes de sorte qu'elle ne dépasse pas une valeur de seuil prédéterminée.

4. Procédé selon l'une quelconque des revendications 1 à 3, dans lequel le procédé comprend la mesure du temps avec un registre d'horloge et la fourniture de ces informations au contrôleur.

5. Procédé selon l'une quelconque des revendications 1 à 4, dans lequel la quantité de charge électrique libérée pendant l'étape de libération des ions est calculée à partir d'un courant mesuré et du temps mesuré pendant l'étape de libération des ions.

6. Procédé selon l'une quelconque des revendications 1 à 5, dans lequel le procédé comprend l'enregistrement de la quantité de charge électrique qui a été libérée du condensateur pendant l'étape de libération des ions dans une mémoire du contrôleur.

7. Procédé selon la revendication 6, dans lequel, pendant la charge du condensateur à une étape de charge suivante, la quantité de charge qui est appliquée au condensateur est inférieure ou égale à la quantité de charge qui a été enregistrée dans la mémoire du contrôleur.

8. Procédé selon l'une quelconque des revendications 1 à 6, dans lequel le procédé comprend la mesure d'une tension sur le condensateur en fonction du temps pendant la charge et l'étape de libération des ions et l'enregistrement de la tension en fonction du temps dans la mémoire du contrôleur.

9. Procédé selon la revendication 8, dans lequel le procédé comprend la mesure d'une différence de tension sur les première et deuxième électrodes du condensateur en fonction du temps et la comparaison de celle-ci avec la différence de tension enregistrée en fonction du temps mémorisée dans la mémoire du contrôleur.

10. Procédé selon l'une quelconque des revendications précédentes, dans lequel, pendant la charge du condensateur, le contrôleur calcule la charge électrique en multipliant un courant mesuré pendant la charge par un temps mesuré provenant d'un registre d'horloge.

11. Appareil pour retirer des ions, l'appareil étant pourvu :
de première et deuxième électrodes formant un condensateur ;
d'un élément d'espacement pour séparer les électrodes du condensateur et permettre à l'eau de s'écouler entre les électrodes ; et
d'un contrôleur pour commander les étapes de charge et de décharge du condensateur, le contrôleur étant construit et agencé pour charger le condensateur avec un courant de charge constant et/ou pour décharger le condensateur avec un courant de décharge constant ;
dans lequel le contrôleur comprend un calculateur pour calculer la quantité de charge électrique libérée du condensateur pendant l'étape de décharge et construit et agencé pour commander la charge électrique stockée sur le condensateur pendant une étape de charge pour qu'elle ne dépasse pas sensiblement une quantité de charge électrique libérée du condensateur pendant une étape de décharge précédente.

12. Appareil selon la revendication 11, dans lequel le contrôleur comprend :
un dispositif de mesure de courant pour mesurer un courant électrique appliqué au condensateur ; et
un processeur pour comparer le courant mesuré avec une valeur de courant de référence et, si le courant mesuré est différent de la valeur de courant de référence, pour ajuster la tension appliquée au condensateur de sorte que le courant mesuré soit égal à la valeur de courant de référence.

13. Appareil selon la revendication 11 ou 12, dans lequel le contrôleur comprend :
un limiteur pour limiter la différence de tension entre les première et deuxième électrodes du condensateur de sorte qu'elle ne dépasse pas une valeur de seuil prédéterminée ;
un registre d'horloge pour mesurer le temps ; ou
une mémoire dans laquelle la quantité de charge libérée pendant l'étape de libération des ions est enregistrée.

14. Appareil selon l'une quelconque des revendications 11 à 13, dans lequel l'appareil comprend un dispositif de mesure de tension pour mesurer une différence de tension sur les première et deuxième électrodes du condensateur, et une mémoire pour mémoriser un profil de tension dans le temps, et le contrôleur est capable de comparer la tension mesurée en fonction du temps avec le profil de tension dans le temps mémorisé.

15. Appareil selon la revendication 14, dans lequel le contrôleur comprend un dispositif de signalisation pour émettre un signal d'erreur si le résultat de la comparaison entre la tension mesurée en fonction du temps et le profil de tension dans le temps mémorisé est supérieur à un signal de seuil, et/ou le dispositif de signalisation est construit et agencé pour communiquer avec un centre de commande à distance.
